# EUROPEAN PATENT APPLICATION

(11) **EP 2 892 207 A1**
(43) Date of publication of application: **08.07.2015**
(21) Application number: 14305006.0
(22) Date of filing: 06.01.2014
(51) Int. Cl.: H04L 29/08

(54) **Identifying where user requests are serviced within a distributed system**

(71) Applicant: ALCATEL LUCENT, 92100 Boulogne-Billancourt (FR)
(72) Inventor: Murray, Robert, Cambridge, Cambridgeshire CB24 6DD (GB)
(74) Representative: Mills, Julia

(57) **Abstract**

A device, a distributed system of a plurality of such devices, a method and a computer program are disclosed. The devices are configured to operate in a distributed system comprising a plurality of the devices. The devices each comprise: at least one input for receiving a user request; control logic operable to determine whether the received user request can be serviced by the device; at least one of storage circuitry and processing circuitry for servicing the user request; at least one output and output control circuitry. The output and output control circuitry are configured to: output the user request for transmission to a further device in response to the control logic determining that the received user request cannot be serviced by the device; and output a response to the user request in response to the device servicing the user request; wherein at least one input is configured to receive responses to the user requests output by the device. The device further comprises determining logic configured to determine from the received responses where the corresponding user request was serviced.

## Description

### FIELD OF THE INVENTION

The present invention relates to systems and in particular distributed systems where a user request can be serviced by a number of devices in data communication with each other.

### BACKGROUND

In many situations it may be advantageous to provide processing or storage capabilities in a distributed way such that a number of devices are provided in communication with each other, each being able to service at least some of the received requests, allowing requests to be distributed between different devices depending on their current loading and availability. This improves performance by allowing the sharing of resources. One problem with such systems is that the assessment of the performance of such a system may be difficult. For such an assessment, details of which devices responded to which user requests may be required for at least some of the devices in order to have an idea of the overall performance of the system, as well as of the performance of individual components. Such a record provides information on system efficiency as well as information on where the system is short of resources. However, extracting such information from a distributed system may not be straightforward.

One example of such a distributed system is a caching system in a content delivery network. Content delivery networks are provided by network operators within a regional network to deliver popular content to local users in a high performance manner. These content delivery networks provide a network of cache servers for storing popular content that is retrieved from more remote locations and can be delivered to local users in response to user requests. Thus, any user request is transmitted via at least some of these servers, until either the content is found and delivered or it is not found and the request is forwarded to the remote content source. In these systems each cache server may store a log of requests that it has serviced. However, to determine the performance of the system as a whole and in particular, to determine the percentage of requests that hit within the content delivery network and do not require access to the content source with the associated increased costs and reduced performance, the log from each server needs to be extracted and they need to be correlated with each other, this is both inconvenient and costly.

### SUMMARY

A first aspect of the present invention provides a device configured to operate in a distributed system comprising a plurality of said devices, said device comprising: at least one input for receiving a user request; control logic operable to determine whether said received user request can be serviced by said device; at least one of storage circuitry and processing circuitry for servicing said user request; at least one output and output control circuitry configured to: output said user request for transmission to a further device in response to said control logic determining that said received user request cannot be serviced by said device; and output a response to said user request in response to said device servicing said user request; wherein said at least one input is configured to receive responses to said user requests output by said device, said device further comprising determining logic configured to determine from said received responses where said corresponding user request was serviced.

The present invention recognises that in distributed systems it may be important to know not only the individual performance of each device within the system but also the performance of the whole system or a subset of the system.

It also recognises that in such systems information on the performance of each device may be stored locally, but to use this local information to determine a cumulative performance requires not only the extraction of each of the individual device performance data but also the correlation of this information, which can be complex and involve the use of bespoke tools.

The present invention addresses this problem by recognising that the nature of a distributed system is such that requests that are not serviced by a device are transmitted to a further device, and similarly when a request is serviced any responses are returned often via the same route. This means that information regarding the servicing of the request can be propagated with the response. This allows performance information to be propagated in the same way as responses are propagated which allows information regarding where the request was serviced to be collected together and extracted and analysed more easily. When determining where the request has been serviced, this may specifically be which device serviced it, or it may be which subset of devices serviced it, or it may be whether one of the plurality of devices or an external device serviced it. In any case this information provides some indication of where the request was serviced that is relevant to the performance of the distributed system.

In some embodiments, said device is configured to perform at least one of: storing history data indicating where each received request was serviced; and outputting an indicator with each of said responses indicating where said corresponding received request was serviced.

In order to propagate the information, a device within the chain of devices should, when passing a response on to a further device, output an indicator with the response indicating where the received response was serviced. If the device is an end or edge device which passes the response to the user then it may be more appropriate to store the information determined from the received indicators, rather than outputting this information. In this way the information from all responses that pass through the devices on the way to a user can be collected and stored together, allowing this data to be extracted and analysed later. In some cases it may be appropriate for all devices to output indicators and also store the data. It maybe that the information stored within devices remote from the user and not communicating directly with the user is never used, as it only provides information relating to the servicing of a subset of requests. Similarly outputting an indicator from an end device to a user may not be useful. However, it may be more convenient to design all devices in the same way and the additional overhead of outputting an indicator or storing data which is not to be used is not high.

In some embodiments, said device comprises storage means for storing a history of said user requests that have been received, said history including data indicating where said user requests were serviced.

Although the history data may not be stored on the device, rather being transmitted to and stored in some external storage, in many cases it may be convenient to store it on the device itself from where it can be extracted as required.

In some embodiments, said determining logic is operable to determine from said received responses whether one of said plurality of devices serviced said user request or whether said user request was serviced by a device external to said distributed system indicated by said destination address.

In some embodiments, said determining logic is operable to determine that said received response was serviced by said device external to said distributed system in response to said received response not comprising an indicator indicating where said response was serviced.

The devices maybe configured to add an indicator to any response which they themselves serviced and in this way other devices receiving this response and knowing the device from which it came can determine which device did service the request. If a response is received with no indicator then this is in itself an indication that one of the plurality of devices did not service the request and therefore the external device to which the request was directed must have done so.

In some embodiments, said output control circuitry is configured to add an identifier of a device from which said response was received to said response, where said response comprises an indicator indicating that said device from which said response was received serviced said user request.

As noted previously a device receiving a response with an indicator that the previous device serviced it and knowing the identity of the previous device can add this information to the response as it is forwarded. In this way a subsequent device will know which device did service the request and the information can propagate through the system in a simple manner.

In some embodiments, said indicator comprises a hit indication and a device identifier identifying said device that serviced said user request.

The information regarding where the request was serviced may be propagated in the form of a hit indication and a device identifier identifying the device where the hit occurred, that is where the request was serviced In some cases the response may comprise a miss indication indicating than none of the plurality of devices serviced the request. In this way with very few bits sufficient data regarding the servicing of the request can be propagated. It should be noted that in some cases miss data is not added to a response as a lack of a hit indication is sufficient to indicate that the request has missed.

In some embodiments said user response comprises a HTTP response header, said HTTP response header including said indicator.

In many cases the response to the request may include a HTTP response header, incorporating the indicator into this is a simple and efficient way of transmitting the information.

In some embodiments, said device is a cache server for storing content, said user request being a request for said content.

Although the method of embodiments of the invention is applicable to many types of distributed systems, where user requests may be serviced by one of several devices on a data path, it is particularly useful in content delivery networks, where cache servers are used for local storage of content and content requests travel through several of these on their way to the content provider. Information on whether the caches were able to service any content requests themselves, or whether the content provider serviced the request being important performance indicators for the system.

A second aspect of the present invention provides a plurality of devices according to a first aspect, arranged in a distributed system comprising said plurality of devices connected together by a network, said network providing said user with access to said plurality of devices and to at least one device external to said distributed system, said user requests having one of said at least one external devices as a destination.

A distributed system made up of a plurality of devices at least some of which may be able to service a request that is otherwise serviced by an external device, is particularly suitable for the present technique, in that information regarding whether a request is serviced within the system or by the external device may be an important performance indicator and yet difficult to obtain by conventional means from such a system.

In some embodiments, said devices are arranged in a hierarchical system such that said user request is transmitted to a device of a lowest hierarchy first and then to consecutive higher hierarchy devices, if said lower hierarchy devices can not service said user request, said lowest hierarchy devices each being configured to store a history data indicating where each received request was serviced.

Where the devices are arranged in a hierarchy then the lowest hierarchy devices are those that communicate directly with the user and are a suitable place to store any history data as they will have information relating to all requests that have passed through them.

In some embodiments, said indicator included with said response comprises an indication of a hierarchical level of said device that serviced said user request.

Where the devices are arranged hierarchically then indicating the hierarchical level of the device that serviced the request is sufficient information to be able to determine performance and is also information that can be imparted in relatively few bits of data.

A third aspect of the present invention provides a method of servicing user requests in a distributed system comprising a plurality of devices, said method comprising: receiving one of said user requests at one of said devices; determining whether said user request can be serviced at said device; and if not outputting said user request for transmission to at least one further device; receiving a response to said user request from said at least one further device, said response providing an indication of where said user request was serviced; determining from said received response where said user request was serviced; and outputting said received response; and if so servicing said request and outputting a response to said user request.

A fourth aspect of the present invention provides a computer program which when executed by a computer performs steps in the method according to a third aspect of the present invention.

A fifth aspect of the present invention provides a computer program product storing a computer program which when executed by a computer performs steps in the method according to a third aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a network for delivering content according to an embodiment of the present invention;
Figure 2 illustrates an alternative example of a network for delivering content according to an embodiment of the present invention;
Figure 3 illustrates a flow diagram illustrating steps in a method for servicing user requests at a device within a distributed system according to an embodiment of the present invention;
Figure 4 illustrates a flow diagram illustrating steps in a method for propagating information relating to the processing of requests in a distributed system; and
Figure 5 illustrates a flow diagram illustrating determining and recording local hits or misses of content requests in a content delivery network.

### DESCRIPTION OF THE EMBODIMENTS

### Overview

Before discussing the embodiments in any more detail, first an overview will be provided.

In distributed systems, performance data regarding the performance of individual devices and/ or the performance of a subset or all of the system can be difficult to obtain. For example, in some content delivery networks that comprise a hierarchy of caches in geo-distributed network locations where any cache may contain content copy that it can deliver in response to a user request, determining how many requests hit within the network is an important KPI (Key Performance Indicator) for all network operators deploying on net content delivery networks and currently such information needs to be extracted from each of the caches and then correlated. It is not normally possible to determine from log files on each appliance how far upstream an individual request was carried. This missing information may be useful in analysis of request latency at each node.

In order to allow analysis of distributed systems to be performed without the need to extract log information and correlate it from individual devices, the present invention seeks to propagate information regarding where each request was serviced with the response to the request. In effect, the present invention recognises that responses to requests travel through the system and are output from the system via particular routes and that adding information to these responses regarding where the request was serviced is a simple way of propagating this information away from individual devices such that it can be collected together in a way that makes it easier to collate and analyse.

Although the problem has been discussed with respect to content delivery networks and caches, it will be appreciated that any distributed system where a plurality of devices are in data communication with each other and where at least a subset of the devices can service a request or transmit it to a further device would be suitable for the use of this technique.

In particular examples, the devices may be arranged in a hierarchy, requests always propagating from the lowest hierarchy to higher hierarchy devices until they are serviced. In such a case, devices can be identified by their hierarchical level as this is the important indicator of performance, and the lowest hierarchy devices may collect the information as these are at the edge of the system and see all the requests and responses that enter or leave the system. They are also easily accessible to extract the data therefrom.

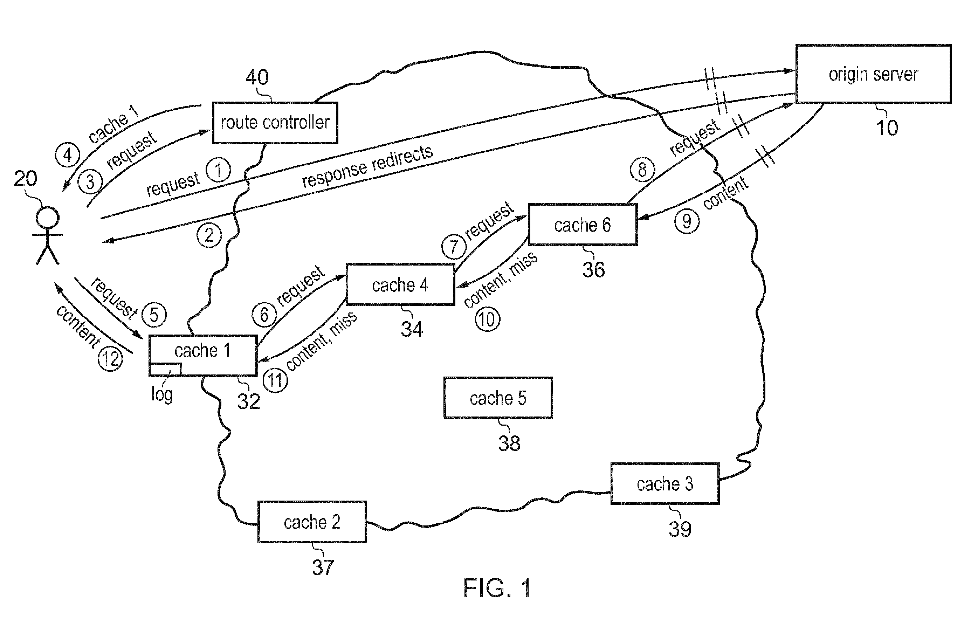

Figure 1 shows a system for delivering content from an origin server 10 to a user 20. The system comprises a distributed system of content delivery caches 32, 34, 36, 37, 38 and 39 that are arranged to locally store content within a local network 25 such that requests for content pass via these caches to the origin server. Where the caches store the content that is requested, then the request never reaches the origin server, the content being delivered from the cache. The effectiveness of the content delivery network depends on how many requests are served by the caches and how many require the origin server to deliver the content. Requests that are sent to the origin server need to leave the local network 25 and access the origin server 10 via the Internet and possibly other networks. This has performance and cost implications, and therefore an important performance indication is the number of requests that are serviced by the content delivery network and the number that reach the origin server.

In this embodiment, a request 1 is sent to the origin server 10 which responds by sending a redirect request such that the request is redirected to a router controller 40 which is the controller of the content delivery network of caches. This router controller transmits a redirection instruction to user 20 indicating that the request should be sent to cache 1.

The request is then sent to cache 1, 32, and in this case cache1 does not contain the requested content and the request is sent further to cache4, 34, which also does not currently store the content, and so on to cache6, 36 where, again, it is not found. In this embodiment cache6 is the highest hierarchy cache and the response is then transmitted to the origin server 10 itself. The origin server 10 responds by transmitting the content and cache6 receives the content and in this case stores it. Cache6, 36, then transmits the content back to the user via cache 4 and cache1 along with an indicator indicating that it did not service the content. In this case the indicator is in the form of a miss which is within the HTTP response header. In other embodiments, this information may be provided simply by there being a lack of a hit indicator in the response header. At cache 1, 32, the information regarding where the request was serviced (that is, that it was not serviced within the content delivery network; rather, it missed within this network) is stored within a log within cache 1, 32. The content is then delivered to the user.

In this way, any request that is transmitted to the content delivery network will pass initially to the one of the lowest hierarchy of caches and any response will travel back via this cache so that information regarding where the request was serviced can be logged within this cache.

In this example there are three lowest hierarchy caches 32, 37 and 39 located towards the edge of the network, there are two intermediate hierarchy caches 34 and 38, and a highest hierarchy cache 36. In the case that the request hit in, say, cache6 then cache6 would respond by transmitting the content with a hit indicator in the response header, and cache4 would then respond by transmitting the content a hit indicator, and a device indicator indicating cache6. It may indicate this by identifying the cache itself or it may simply indicate that it is the highest hierarchy cache where the request hit. It is the hierarchical level of the cache where the hit occurred that is the important thing for performance, the actual identity of the cache not being so important. Transmitting information of the hierarchical level of a device rather than an actual device identifier enables less information to be transmitted and may be a convenient way of transmitting this information with the response.

In this example each of the lowest hierarchical level caches, 32, 37 and 39 have logs that store information indicating where all requests received by the network have been serviced. These logs can be retrieved and analysed to determine the performance of the network as a whole. The higher level caches do not need to be accessed as any information regarding what requests they did or did not service will have been propagated with the responses to the requests to these edge caches 32, 37 and 39 and thus, all relevant information is stored here.

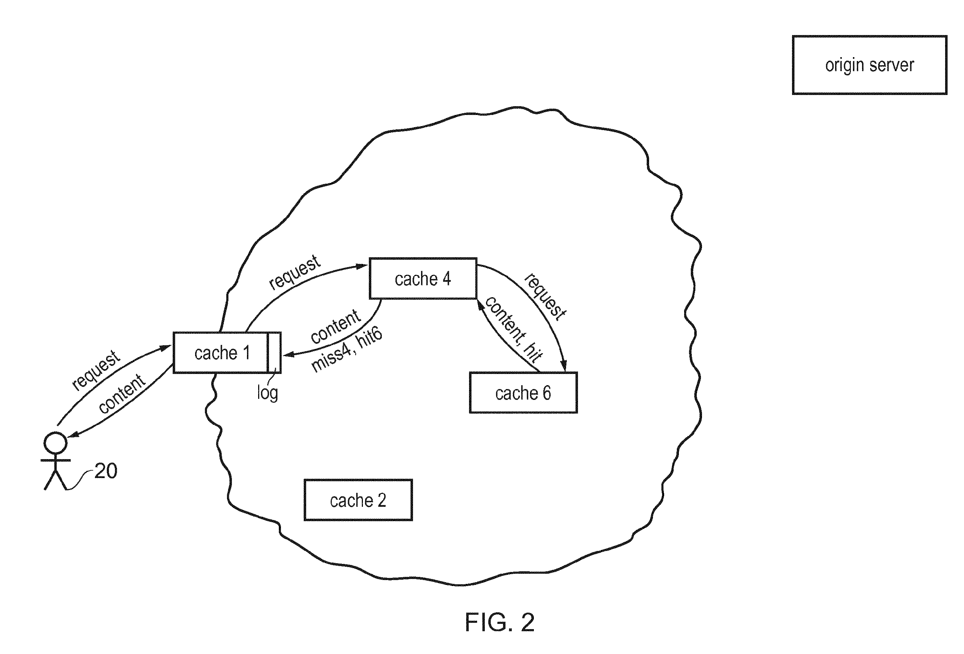

Figure 2 shows an alternative embodiment where the initial steps of redirection of the request by the origin server to a router controller is not shown. In this case, the request from user 20 is transmitted to cache1 where the content requested is not stored. The request is therefore transmitted further to cache4, where again no content is found and then on to cache6 where there is a hit and the content is found.

A response is then sent with the content and a hit indicator, and cache4 receives the response adds an indicator to the response indicating hit in 6 and missed in 4 and transmits the response and content further. Although in this embodiment the information regarding both where the request hit and missed is added to the response, in other embodiments only the hit information is transmitted, in some cases with a device indicator and in some without.

The amount of information sent with a response depends on the embodiment. In some cases, it may be that the only information that is required to monitor performance is whether a request hits within the content delivery network and therefore content hit is the only information reported. Alternatively, additional information regarding either where the request hit, i.e. the actual cache, and/ or the hierarchical level of the cache may be important to know and in this case this information will be transmitted. The actual identity of the cache may be important where the caches are not arranged hierarchically, and where the request may follow any route. It may also be important to know the caches where the request hit/missed, such that locations in the network that are short of resources can be identified as well as the performance of the system being known.

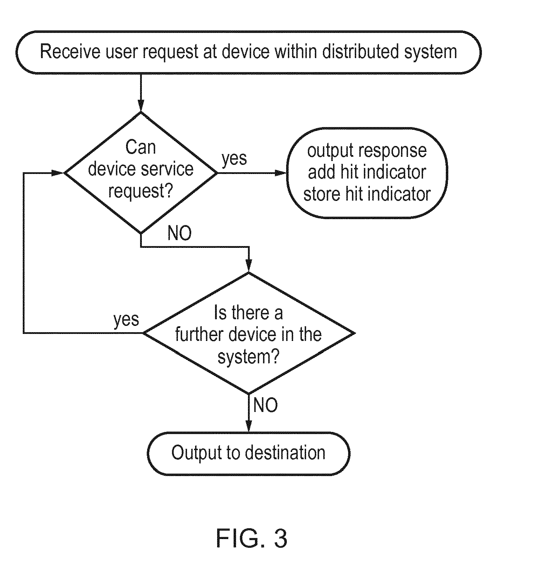

Figure 3 shows a flow diagram illustrating steps in a method for servicing user requests at a device within a distributed system according to an embodiment of the present invention. Initially the device receives a user request and it is determined if the device can service the request. If it can, then a response to the request is output, a hit indicator is added to that response and the device stores a record of that hit indicator such that the device stores a log of the processing of the requests.

If the device cannot service the request then it will transmit the request to a further device in the system, if there is one, and that device will determine if it can service the request and if it can it will add a hit indicator and store that indicator and output a response. If there is no further device in the system then it will output the request to the destination.

This method relates to a distributed system having uniform devices which are all configured to perform in the same way whatever point in the system they is located at. In some embodiments, devices located at the edge of a system, that is devices of the lowest hierarchy in a hierarchical system, are configured to act differently to other devices within the system. These devices are the devices that are in direct communication with a user and in some cases it is only these devices which store a log of where the requests were serviced, other devices simply passing on the information in the form of a hit indicator. Similarly, these "edge" devices may not transmit the indicator with the response when they output it, but may simply store this hit indicator for retrieval by an analyser later.

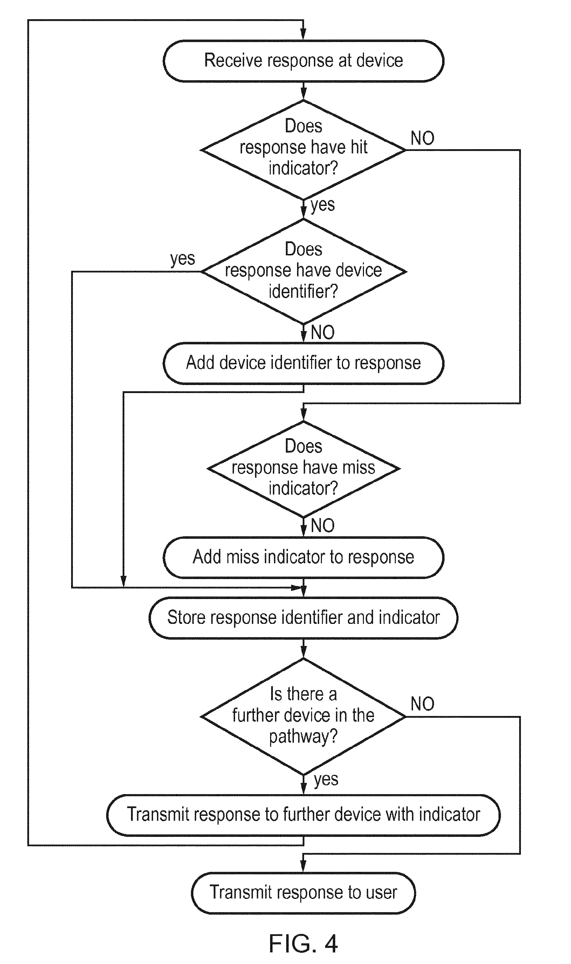

Figure 4 shows a flow diagram illustrating methods performed by a device of an embodiment of the invention such as a device configured to perform the method of Figure 3, when it receives responses to requests that it has transmitted. Thus, a response is received at the device and the device determines whether the response has a hit indicator associated with it. If it does not, it will then determine if it has a miss indicator and if it does not then it will add a miss indicator to the response. It will then store the response identifier and the indicator and determine whether or not there is a further device in the pathway. In this regard, when receiving a response without a miss indicator or a hit indicator it is clear that the request has been serviced by a device external to the system, as devices within the system add these indicators. Thus, adding a miss indicator is the appropriate action.

If the response had a hit indicator associated with it then it is determined if the response has a device identifier. If not, then a device identifier of the device from which the response was received is added to the response and the indicator along with a response identifier, is stored. The device then determines if there is a further device in the pathway and if there is then the response and the indicator is transmitted to the further device. If there is not then the response is transmitted to the user. The response may be transmitted with the indicator to the user and the user will disregard the indicator. Alternatively, the indicator may not be transmitted as the user will only disregard it in any case. Although in this embodiment a miss indicator is added to the response if a response is received without an indicator, in some cases no miss indicator may be added, although this information can be deduced from the lack of indicator and can be stored.

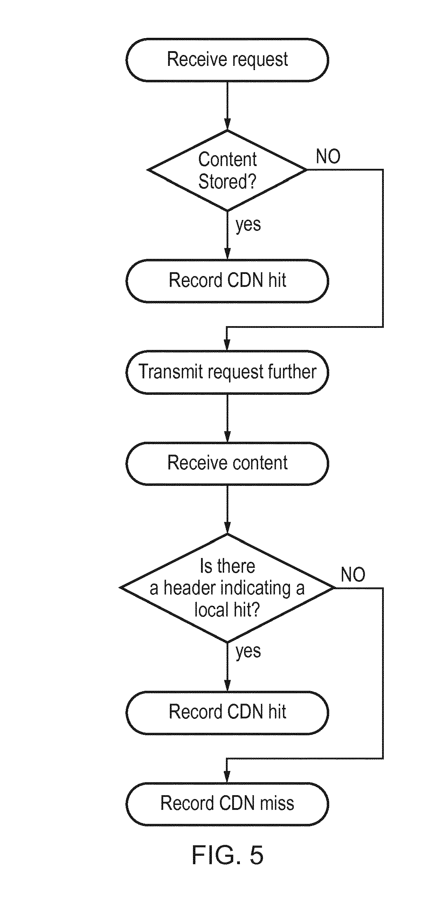

Figure 5 shows steps illustrating a method performed by a content delivery network according to an embodiment of the present invention. The content delivery network receives a request from a client for content and this is transmitted to a device within the content delivery network where it is determined whether the content is stored in that device or not.

If the content is stored in the device, then the content delivery network will record a hit. If it is not stored, the request is transmitted further to other devices within the network and eventually if none of the devices within the network store the content to the origin server.

A response to the request is sent along with the content. The response will have a header and the header will have an indication of whether there has been a local hit, within the content delivery network, or not. If there has been a local hit then a content delivery network hit will be recorded. If there has not, then a miss will be recorded.

In this regard, the device that serves the content will add a local hit indicator in the header when returning the content and, thus, simply by looking at this header the content delivery network can determine whether there was a hit within the content delivery network or not. If there is no such indication then the content must have been returned from the origin server and a miss will be recorded.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A device configured to operate in a distributed system comprising a plurality of said devices, said device comprising:
at least one input for receiving a user request;
control logic operable to determine whether said received user request can be serviced by said device;
at least one of storage circuitry and processing circuitry for servicing said user request;
at least one output and output control circuitry configured to:
output said user request for transmission to a further device in response to said control logic determining that said received user request cannot be serviced by said device; and
output a response to said user request in response to said device servicing said user request; wherein
said at least one input is configured to receive responses to said user requests output by said device, said device further comprising
determining logic configured to determine from said received responses where said corresponding user request was serviced.

2. A device according to claim 1, said device being configured to perform at least one of:
storing history data indicating where each received request was serviced; and
outputting an indicator with each of said responses indicating where said corresponding received request was serviced.

3. A device according to claim 1 or 2, said device comprising storage means for storing a history of said user requests that have been received, said history including data indicating where said user requests were serviced.

4. A device according to any preceding claim, wherein said determining logic is operable to determine from said received responses whether one of said plurality of devices serviced said user request or whether said user request was serviced by a device external to said distributed system indicated by said destination address.

5. A device according to claim 4, wherein said determining logic is operable to determine that said received response was serviced by said device external to said distributed system in response to said received response not comprising an indicator indicating where said response was serviced.

6. A device according to any preceding claim, said output control circuitry being configured to add an identifier of a device from which said response was received to said response, where said response comprises an indicator indicating that said device from which said response was received serviced said user request.

7. A device according to any preceding claim, wherein at least one of said responses comprise an indicator, said indicator comprising at least one of a hit indication and a device identifier identifying said device that serviced said user request and a miss indication.

8. A device according to claim 7, wherein said user response comprises a HTTP response header, said HTTP response header including said indicator.

9. A device according to any preceding claim, wherein said device is a cache server for storing content, said user request being a request for said content.

10. A plurality of devices according to any preceding claim, arranged in a distributed system comprising said plurality of devices connected together by a network, said network providing said user with access to said plurality of devices and to at least one device external to said distributed system, said user requests having one of said at least one external devices as a destination.

11. A plurality of devices according to claim 10, wherein said devices are arranged in a hierarchical system such that said user request is transmitted to a device of a lowest hierarchy first and then to consecutive higher hierarchy devices if said lower hierarchy devices can not service said user request, said lowest hierarchy devices each being configured to store a history data indicating where each received request was serviced.

12. A plurality of devices according to claim 11, wherein at least some of said responses comprise an indicator, said indicator comprising an indication of a hierarchical level of said device that serviced said user request.

13. A method of servicing user requests in a distributed system comprising a plurality of devices, said method comprising:
receiving one of said user requests at one of said devices;
determining whether said user request can be serviced at said device; and if not
outputting said user request for transmission to at least one further device;
receiving a response to said user request from said at least one further device, said response providing an indication of where said user request was serviced;
determining from said received response where said user request was serviced; and
outputting said received response; and if so
servicing said request and outputting a response to said user request.

14. A method according to claim 13, further comprising outputting with each of said responses an indicator indicating where said user request was serviced.

15. A computer program which when executed by a computer performs steps in the method according to claim 13 or 14.
